# EUROPEAN PATENT SPECIFICATION

(11) **EP 4 178 334 B1**
(45) Date of publication and mention of the grant of the patent: **20.05.2026**
(21) Application number: 21838734.8
(22) Date of filing: 09.07.2021
(51) Int. Cl.: A01B 43/00, B25J 15/00, B25J 15/10

(54) **GROUND VEHICLE MOUNTABLE, MANUALLY CONTROLLED OBJECT PICKER SYSTEM AND METHOD**
AN BODENFAHRZEUG MONTIERBARES, MANUELL GESTEUERTES OBJEKTGREIFSYSTEM UND VERFAHREN
SYSTÈME ET PROCÉDÉ DE RAMASSAGE D'OBJETS À COMMANDE MANUELLE POUVANT ÊTRE MONTÉ SUR UN VÉHICULE TERRESTRE

(30) Priority: 10.07.2020 US 202063050663 P
(43) Date of publication of application: 17.05.2023
(73) Proprietor: Terraclear Inc., Bellevue, WA 98005 (US)
(72) Inventor: FREI, Brent Ronald, Bellevue, Washington 98005 (US); HOLMGREN, Clifford, Bellevue, Washington 98005 (US); CHMELIK, Austin, Bellevue, Washington 98005 (US); KEO, Stapana, Bellevue, Washington 98005 (US); KUBICKI, Maximilian, Bellevue, Washington 98005 (US); NAYAK, Vivek Ullal, Bellevue, Washington 98005 (US)
(74) Representative: Eisenführ Speiser
(86) International application number: PCT/US2021/041165
(87) International publication number: WO 2022/011306

(56) References cited:
- US-A- 3 807 247
- US-A1- 2004 102 136
- US-A1- 2015 354 166
- US-A1- 2018 179 735
- US-A1- 2020 015 401
- US-A1- 2020 015 401
- US-B1- 6 820 357
- US-B2- 6 602 155
- US-B2- 9 696 162

## Description

### TECHNICAL FIELD

The present disclosure relates generally to a system and method for identifying and removing of objects from the ground or a field.

### BACKGROUND

### Description of the Related Art

Rocks and other objects in agricultural fields present a problem to farmers across the country and throughout the world. Rocks can foul up and interfere with the operation of automated, expensive agricultural equipment, such as mechanized seeders and combines. Rocks also present safety hazards to farmers and their land, such as from sparks arising from contact with rotating metallic equipment. These issues can result in expensive repair, lost productivity, and the need for careful planning.

While a number of implements - such as rakes, windrowers, and sieves, or combinations thereof - can be used to clear fields of rocks and other small objects, they generally include manual operation and still have a high rate of failure (i.e., they often miss rocks). This failure rate often results in multiple passes by these implements and they are often supplemented by human intervention to pick rocks that are left behind. Such manual operation and human picking intervention involves expenditure on the labor required, and is often slow and unpleasant work.

In other techniques, rocks are either picked using specialized rock picking implements, including rakes and buckets that capture rocks by filtering the soil, or dealt with in situ using rock rollers and crushers that either push the rocks down into the soil or crush them in place. All of the above implements result in significant disturbance of the soil and do not target specific rocks. As a result, removal of rocks is typically undertaken after cultivation before seeding to avoid damage to the seeded crop. It is with respect to these and other considerations that the embodiments described herein have been made.

US 2020/015401 A1 discloses an object collection system with a mechanical arm assembly, a receptacle, an end-effector and a user input device.

US 6,820,357 B1 discloses an object collection system with a mechanical arm, a receptacle, an end-effector and a user input device.

US 2015/354166 A1 discloses an objection collection system having a mechanical arm assembly, a receptacle, an end-effector and a user input device.

### BRIEF SUMMARY

Embodiments are generally directed to the use of an object-collection system that enables rapid rock picking of an entire field with a small (e.g., even single person) crew. The object-collection system creates limited ground disturbance due to the selective nature of the end-effector and positioning capabilities of the mechanical arm assembly and the rail and carriage assembly. Additionally, the object-collection system has high productivity due to the maneuverability of the system, as well as the combination of high operator visibility with a front-mounted mechanical arm assembly and end-effector on the vehicle, in contrast to pull-behind mechanical rock pickers that are hard to maneuver and position relative to rocks that need to be acquired. Further, the object-collection system creates low ground pressure in contrast to pull-behind mechanical rock pickers or systems that push rock down into the ground.

Some embodiments of an object-collection system for collecting small objects off of a ground surface may be summarized as including a mounting frame, a mechanical arm assembly, a rail and carriage assembly, a pivot assembly, an end- effector, and a user input device. The mounting frame has a vehicle attachment point that attaches to a ground vehicle. The mechanical arm assembly has multiple degrees of freedom and is configured to pick up small objects off of the ground surface. The mechanical arm assembly has a proximal end and a distal end. The rail and carriage assembly supports the mechanical arm assembly and enables movement of the mechanical arm assembly laterally with respect to a direction of travel of the ground vehicle. The rail and carriage assembly is attached to the mounting frame. The pivot assembly is located at a connection of the rail and carriage assembly and the distal end of the mechanical arm assembly. The pivot assembly enables the proximal end of the mechanical arm assembly to raise and lower vertically from the ground surface to pick up objects and place them in a receptacle for holding small objects picked up by the mechanical arm assembly. The end-effector is positioned at the proximal end of the
mechanical arm assembly. The end-effector grasps and acquires small objects from the ground surface. The user input device provides operator control input from an operator on the ground vehicle to actuate the multiple degrees of freedom of the mechanical arm assembly and to actuate the end-effector. The user input controls electrical or hydraulic control signals to drive electric or hydraulic actuators in the object collection system.

In another aspect of the object-collection system, the end-effector includes two or more paddle components with one or more moving belts on each of the two or more paddle components. In still another aspect of some embodiments, one or more of the moving belts on each of the two or more paddle components of the end-effector move to pull the objects in between the paddle components. In yet another aspect of some embodiments, the two or more paddle components of the end-effector include multiple joints which enable repositioning of an object after the object has been picked up. In some embodiments, the end-effectors include three paddle components, and at least one of the three paddle components includes a hinge that enables an object to be pinched. In another aspect of some embodiments, the two or more paddle components of the end-effector each include multiple segments connected by hinges, which enable greater precision and degrees of manipulation. Continuing in this embodiment, a first two of the paddle components are fixed in position with respect to each other, and a third paddle component is spaced apart from the first two of the paddle components. Additionally, in this embodiment, the third paddle component includes a hinge that enables an object to be pinched.

In some embodiments of the object-collection system, the end-effector is initially positioned a height distance above the ground surface, and the end-effector is moveable towards the ground surface by actuating one or more of the multiple degrees of freedom of the mechanical arm assembly to pick up small objects off of the ground surface. Alternatively or additionally, the entire object-collection system (including the receptacle) is also moveable towards the ground surface to the target small objects using the vehicle front-end loader controls. Otherwise stated, the attachment point itself has two or more degrees of freedom in some embodiments, which may be redundant with some of the degrees of freedom provided by the object-collection system. Hence, these degrees of freedom provided by the attachment point itself may be used instead of the degrees of freedom provided by the object-collection system for ease of use, convenience, added range of motion, and the like.

For example, the operator of the object-collection system may tilt the receptacle forward to make the end-effector contact a target object, since the same right hand joystick (*e*.*g*., user input device) with the pivot control button for the object-collection system may also be pushed forward to tilt the receptacle forward. This action may be more efficient or natural to the operator. This alternate technique for receptacle and end-effector control is possible at least partially because of the higher visibility and overall responsiveness provided by the utilized ground vehicle (*e*.*g*., skid steer).

In another aspect of some embodiments, the mechanical arm assembly is extendable, enabling the end-effector at the proximal end of the mechanical arm assembly to move away from the receptacle and towards a small object to be picked on the ground surface. Conversely, the mechanical arm assembly is also retractable, enabling the end-effector at the proximal end of the mechanical arm assembly to move towards the receptacle and away from the ground surface after the small object has been picked. In still another aspect of some embodiments, the mechanical arm assembly includes multiple segments and one or more segments telescopes within another segment of the mechanical arm assembly. In yet another aspect of some embodiments, the receptacle is rotatably associated with the ground vehicle, enabling the receptacle to rotate and dump small objects that have been placed in the receptacle. In some embodiments of the object-collection system, the user input device is a joy stick, while in other embodiments of the object-collection system, the user input device is a control pad.

In one or more embodiments of the object-collection system, the system includes electro-hydraulic controls, electrical controls, or both. In some embodiments, the system also includes one or more of hydraulic linear actuators, electric linear actuators, hydraulic rotary motors, and electric rotary motors. In another aspect of some embodiments, lateral motion of the mechanical arm assembly along the rail and carriage assembly is actuated either by one or more of a cylinder actuator, linear actuator, chain drive and motor, and belt drive and motor. In still another aspect of some embodiments, the pivot assembly, which is located at a connection of the rail and carriage assembly and the distal end of the mechanical arm assembly, is one or more of a single pivot j oint, a multi-pivot jointed arm, a four-bar parallel linkage, or other parallel linkage. In yet another aspect of some embodiments, when dumping small objects from the receptacle, the mechanical arm assembly is raised up to a high point vertically and the carriage of the rail and carriage assembly is moved to one side of the rail, enabling the operator to raise and tilt the receptacle forward to drop any contained small objects into a region outside of an area of interest.

Referring now to another aspect, in some embodiments the control system of the object-collection system receives operator input from a user input device (or other input means) by an operator on the ground vehicle to actuate the mechanical arm assembly and the end-effector. The control system in such embodiments includes a processor and a memory storing computer instructions that, when executed by the processor, cause the processor to perform actions including, by way of example only, and not by way of requirement or limitation: receive operator input to move the mechanical arm assembly; send instructions to actuators, motors, or both to move one or more segments of the mechanical arm assembly within one, two, or three degrees of freedom and position the end-effector; receive operator input to move one or more paddles of the end-effector; send instructions to actuators, motors, or both to move one or more paddles of the end-effector; receive operator input to move one or more belts on one or more paddles of the end-effector; and send instructions to actuators, motors, or both to move one or more belts on one or more paddles of the end-effector.

Notably, in other embodiments of the object-collection system no control system is included. Since there is no controller intermediating user input to actuators in these embodiments, instead the user input device (*e*.*g*., joystick) directly sends an electrical signal with enough power (amperage) to directly actuate the electro-hydraulic valve that the user input device is trying to control. Accordingly, such embodiments use this type of direct input to implement electro-hydraulic valves. Other embodiments of the object-collection system for collecting small objects off of a ground surface may be summarized as including: a mechanical arm assembly, an end-effector, and a user input device. The mechanical arm assembly has multiple degrees of freedom and is configured to pick up small objects off of the ground surface and place them in a receptacle for holding small objects. The mechanical arm assembly has a proximal end and a distal end. The end-effector is positioned at the proximal end of the mechanical arm assembly. The end-effector grasps and acquires small objects from the ground surface. The user input device provides operator control input from an operator on a ground vehicle to actuate the multiple degrees of freedom of the mechanical arm assembly and actuate the end-effector. The user input device sends signals from the user input device to control electric or hydraulic actuators in the object collection system.

Some embodiments of the object-collection system further include a mounting frame having a vehicle attachment point that attaches to a ground vehicle. Other embodiments of the object-collection system further include a rail and carriage assembly that supports the mechanical arm assembly and that enables movement of the mechanical arm assembly laterally with respect to a direction of travel of the ground vehicle. The rail and carriage assembly is attached to the mounting frame. Still other embodiments of the object-collection system further include a pivot assembly located at a connection of the rail and carriage assembly and the distal end of the mechanical arm assembly that enables the proximal end of the mechanical arm assembly to raise and lower vertically from the ground surface to pick up objects.

In another aspect of the object-collection system, the end-effector includes two or more paddle components with one or more moving belts on each of the two or more paddle components. In still another aspect of some embodiments, one or more of the moving belts on each of the two or more paddle components of the end-effector move to pull the objects in between the paddle components. In yet another aspect of some embodiments, the two or more paddle components of the end-effector include multiple joints which enable repositioning of an object after the object has been picked up. In some embodiments, the end-effectors include three paddle components, and at least one of the three paddle components includes a hinge that enables an object to be pinched. In another aspect of some embodiments, the two or more paddle components of the end-effector each include multiple segments connected by hinges, which enable greater precision and degrees of manipulation. Continuing in this embodiment, a first two of the paddle components are fixed in position with respect to each other, and a third paddle component is spaced apart from the first two of the paddle components. Additionally, in this embodiment, the third paddle component includes a hinge that enables an object to be pinched.

In some embodiments of the object-collection system, the end-effector is initially positioned a height distance above the ground surface, and the end-effector is moveable towards the ground surface by actuating one or more of the multiple degrees of freedom of the mechanical arm assembly to pick up small objects off of the ground surface. In another aspect of some embodiments, the mechanical arm assembly is extendable, enabling the end-effector at the proximal end of the mechanical arm assembly to move away from the receptacle and towards a small object to be picked on the ground surface. Conversely, the mechanical arm assembly is also retractable, enabling the end-effector at the proximal end of the mechanical arm assembly to move towards the receptacle and away from the ground surface after the small object has been picked. In still another aspect of some embodiments, the mechanical arm assembly includes multiple segments and one or more segments telescopes within another segment of the mechanical arm assembly. In yet another aspect of some embodiments, the receptacle is rotatably associated with the ground vehicle, enabling the receptacle to rotate and dump small objects that have been placed in the receptacle. As described above, in some embodiments the entire object-collection system (including the receptacle) is also moveable and rotatable towards the ground surface to the target small objects using the vehicle front-end loader controls. Otherwise stated, the attachment point itself has two or more degrees of freedom in some embodiments, which may be redundant with some of the degrees of freedom provided by the object-collection system. In some embodiments of the object-collection system, the user input device is a joy stick, while in other embodiments of the object-collection system, the user input device is a control pad.

In one or more embodiments of the object-collection system, the system includes electro-hydraulic controls, electrical controls, or both. In some embodiments, the system also includes one or more of hydraulic linear actuators, electric linear actuators, hydraulic rotary motors, and electric rotary motors. In another aspect of some embodiments, lateral motion of the mechanical arm assembly along the rail and carriage assembly is actuated either by one or more of a cylinder actuator, linear actuator, chain drive and motor, and belt drive and motor. In still another aspect of some embodiments, the pivot assembly, which is located at a connection of the rail and carriage assembly and the distal end of the mechanical arm assembly, is one or more of a single pivot j oint, a multi-pivot jointed arm, a four-bar parallel linkage, or other parallel linkage. In yet another aspect of some embodiments, when dumping small objects from the receptacle, the mechanical arm assembly is raised up to a high point vertically and the carriage of the rail and carriage assembly is moved to one side of the rail, enabling the operator to raise and tilt the receptacle forward to drop any contained small objects into a region outside of an area of interest.

As described above, in some embodiments the entire object-collection system (including the receptacle) is also moveable and rotatable towards the ground surface to the target small objects using the vehicle front-end loader controls. Otherwise stated, the attachment point itself has two or more degrees of freedom in some embodiments, which may be redundant with some of the degrees of freedom provided by the object-collection system.

Referring now to another aspect, the control system of the object-collection system receives operator input from a user input device (or other input means) by an operator on the ground vehicle to actuate the mechanical arm assembly and the end-effector. The control system includes a processor and a memory storing computer instructions that, when executed by the processor, cause the processor to perform actions including, by way of example only, and not by way of requirement or limitation: receive operator input to move the mechanical arm assembly; send instructions to actuators, motors, or both to move one or more segments of the mechanical arm assembly within one, two, or three degrees of freedom and position the end-effector; receive operator input to move one or more paddles of the end-effector; send instructions to actuators, motors, or both to move one or more paddles of the end-effector; receive operator input to move one or more belts on one or more paddles of the end-effector; and send instructions to actuators, motors, or both to move one or more belts on one or more paddles of the end-effector.

Still other embodiments of an object-collection system for collecting small objects off of a ground surface may be summarized as including: a mechanical arm assembly with multiple degrees of freedom that is configured to pick up small objects off of the ground surface and place them in a receptacle for holding small objects, the mechanical arm assembly having a proximal end and a distal end; an end-effector positioned at the proximal end of the mechanical arm assembly that grasps and acquires small objects from the ground surface; a control system that receives operator input from a user input device by an operator on the ground vehicle to actuate the mechanical arm assembly and the end-effector, the control system including a processor and a memory storing computer instructions that, when executed by the processor, cause the processor to: receive operator input to move the mechanical arm assembly; send instructions to actuators, motors, or both to move one or more segments of the mechanical arm assembly within one, two, or three degrees of freedom and position the end-effector; receive operator input to move one or more paddles of the end-effector; send instructions to actuators, motors, or both to move one or more paddles of the end-effector; receive operator input to move one or more belts on one or more paddles of the end-effector; and send instructions to actuators, motors, or both to move one or more belts on one or more paddles of the end-effector.

In yet other embodiments, an actuation button and control system include a processor and a memory storing computer instructions that, when executed by the processor, cause the processor to: receive operator input via an actuation button that triggers low level automation of combined functions to move two or more of (1) the mechanical arm assembly, (2) one or more paddles of the end-effector, and (3) one or more belts on one or more paddles of the end-effector; and send instructions to actuators, motors, or both to move two or more of (1) the mechanical arm assembly, (2) one or more paddles of the end-effector, and (3) one or more belts on one or more paddles of the end-effector.

In other embodiments, one or more paddles each include a central guide rail that is positioned between the two longitudinal rows of teeth that prevent derailment of the belts on the one or more paddles.

In still other embodiments, an end-effector includes a belt and pivoting idler assembly that is released from a tensioned position by removing a pin and rotating the assembly about a pivoting point. The belt is removable and replaceable while the pivoting idler assembly is in an un-tensioned position. The belt is ready for operation when the pivoting idler assembly is rotated into a tensioned position.

### BRIEF DESCRIPTION OF THE SEVERAL VIEWS OF THE DRAWINGS

Non-limiting and non-exhaustive embodiments are described with reference to the following drawings. In the drawings, like reference numerals refer to like parts throughout the various figures unless otherwise specified.

For a better understanding of the present invention, reference will be made to the following Detailed Description, which is to be read in association with the accompanying drawings:
FIG. 1 illustrates a perspective view of an object-collection system having a receptacle, a rail and carriage assembly, a multilink arm assembly, and a three paddle end-effector with rotatable belts on each paddle;
FIG. 2 illustrates a top view of the rail and carriage assembly of the object-collection system;
FIG. 3 illustrates a perspective side view of an object-collection system having a receptacle, a rail and carriage assembly, and a multilink arm assembly;
FIG. 4A illustrates a perspective view of one embodiment of a joy stick operator input system in an object-collection system;
FIG. 4B illustrates a perspective view of another embodiment of a joy stick operator input system in an object-collection system;
FIG. 5 illustrates a perspective view of an object-collection system having a vehicle, a bucket, and a two paddle small object picking assembly with a multilink telescoping picking arm;
FIG. 6 illustrates a perspective view of an object-collection system having a bucket, and a two paddle small object picking assembly with a telescoping picking arm;
FIG. 7 illustrates a perspective view of an object-collection system having a bucket, and a three paddle small object picking assembly with a telescoping picking arm and a hinge on the third paddle;
FIG. 8 illustrates a perspective view of an object-collection system having a bucket, and a two paddle small object picking assembly with two telescoping picking arms;
FIG. 9 illustrates a perspective view of an object-collection system having a bucket, and a three paddle small object picking assembly with a lateral sliding mechanism and a hinge on the third paddle;
FIG. 10 illustrates a perspective view of an object-collection system having a vehicle, a bucket, and a two paddle small object picking assembly with a lateral sliding mechanism;
FIG. 11A illustrates a perspective view of an object-collection system having a three paddle small object picking assembly with moving belts on the third paddle;
FIG. 11B illustrates an inverted perspective view of an object-collection system having a three paddle small object picking assembly with moving belts on the third paddle;
FIG. 12A illustrates a perspective view of an object-collection system having a mechanical arm assembly that includes a slot and spring assembly;
FIG. 12B illustrates a perspective view of an object-collection system having a central guide rail positioned between two longitudinal rows of teeth on each paddle to prevent derailment of an associated belt;
FIG. 12C illustrates a perspective view of an object-collection system having a pivoting idler assembly that is releasable from a tensioned position by removing a pin and rotating about a pivoting point to remove and replace a belt; and
FIG. 13 illustrates a block diagram of an example processor based device used to implement one or more of the electronic devices described herein.

### DETAILED DESCRIPTION

The following description, along with the accompanying drawings, sets forth certain specific details in order to provide a thorough understanding of various disclosed embodiments. However, one skilled in the relevant art will recognize that the disclosed embodiments may be practiced in various combinations, without one or more of these specific details, or with other methods, components, devices, materials, etc. In other instances, well-known structures or components that are associated with the environment of the present disclosure, including but not limited to the communication systems and networks, have not been shown or described in order to avoid unnecessarily obscuring descriptions of the embodiments. Additionally, the various embodiments may be methods, systems, media, or devices. Accordingly, the various embodiments may be entirely hardware embodiments, entirely software embodiments, or embodiments combining software and hardware aspects.

Throughout the specification, claims, and drawings, the following terms take the meaning explicitly associated herein, unless the context clearly dictates otherwise. The term "herein" refers to the specification, claims, and drawings associated with the current application. The phrases "in one embodiment," "in another embodiment," "in various embodiments," "in some embodiments," "in other embodiments," and other variations thereof refer to one or more features, structures, functions, limitations, or characteristics of the present disclosure, and are not limited to the same or different embodiments unless the context clearly dictates otherwise. As used herein, the term "or" is an inclusive "or" operator, and is equivalent to the phrases "A or B, or both" or "A or B or C, or any combination thereof," and lists with additional elements are similarly treated. The term "based on" is not exclusive and allows for being based on additional features, functions, aspects, or limitations not described, unless the context clearly dictates otherwise. In addition, throughout the specification, the meaning of "a," "an," and "the" include singular and plural references.

In the description below, the x-direction is across the direction of motion of the ground vehicle (*i.e.*, lateral motion), the y-direction the direction of forward motion of the vehicle and the z-direction the upwards normal from the ground plane (*i.e.*, vertical motion).

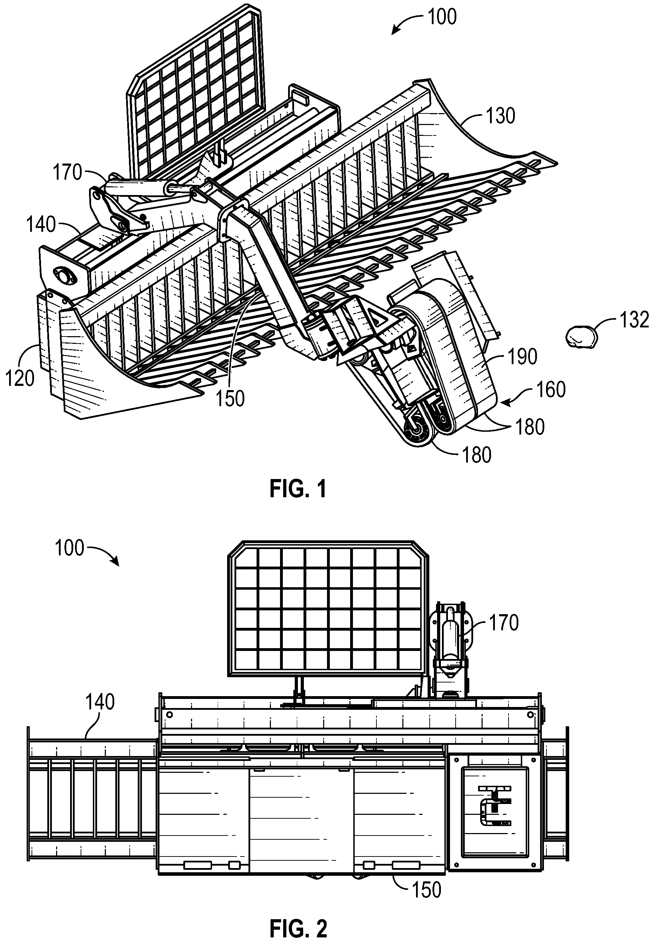

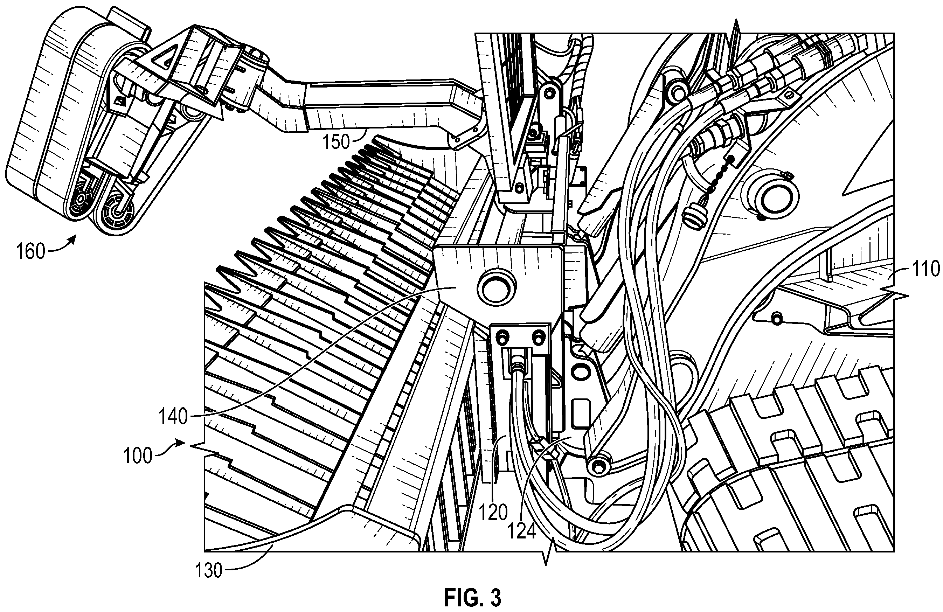

Referring now to Figures 1, 2, and 3, in one or more implementations, an object-collection system 100 attaches to a ground vehicle 110, such as a skid-steer, on its front-end loader via a mounting frame and adapter assembly 120. The mounting frame and adapter assembly 120 connects to the skid-steer via a vehicle attachment interface 124 at its distal end with the front-end loader of the skid steer vehicle 110. The frame and adapter assembly 120 interfaces on its proximal end with a receptacle 130 such as a rock bucket. The receptacle 130 is shaped to enable retention of contained rocks in a wide range of bucket tilt positions, and has slots or other kinds of grates to allow it to shed any minimal quantities of soil acquired along with the targeted rocks. In other implementations, the object-collection system 100 is operatively associated with the receptacle 130, but is actually connected, either directly or indirectly, to another part of the object-collection system 100, or it may be connected to the vehicle 110.

This mounting frame and adapter assembly 120 carries a rail and carriage assembly 140 that moves laterally (*i.e.*, along the x-axis) providing coverage of the full swath of the attached receptacle 130. This lateral motion of the rail and carriage assembly 140 may be actuated by either one or more of a cylinder actuator, linear actuator, chain drive and motor, and belt drive and motor.

A mechanical arm assembly 150 is mounted to the rail and carriage assembly 140 at the distal end of the mechanical arm assembly 150. The mechanical arm assembly 150 may be moved vertically up and down (*i.e.*, primarily along the z-axis) relative to the ground to position an end effector 160, which is mounted on the proximal end of the mechanical arm assembly 150. This movement of the end effector 160 by the mechanical arm assembly 150 enables precise contact to be made between the end effector 160 and a targeted rock 132 on the ground.

**In** another aspect of the object-collection system 100, the movement of the end effector 160 by the mechanical arm assembly 150 is also controlled by a pivot assembly 170. The pivot assembly 170 enables the mechanical arm assembly 150 to move with multiple (e.g., two or three) degrees of freedom that enables the end effector 160 to be placed in contact with a target rock 132 on the ground with great accuracy. The mechanical arm assembly 150 may be moved up and down either with a single pivot or dual-pivot mechanism. **In** some embodiments, the mechanical arm assembly 150 is attached to the rail and carriage assembly 140 with a pivot assembly 170 that comprises a single pivoting joint. However, in other embodiments, the pivot assembly 170 and mechanical arm assembly 150 form a more complex multi-jointed arm, including linkages such as a four-bar parallel linkage or other parallel linkages.

In some embodiments, such joints may be actuated with one or more of cylinder actuators, linear actuators, hydraulic motors, and electric motors. In other embodiments, gear reductions may also be included as necessary. Notably, in some embodiments, the object-collection system 100 is able to dump rocks from the receptacle 130 by raising the mechanical arm assembly 150 to its highest point and the carriage on the rail and carriage assembly 140 all of the way over to one side. This enables the operator to raise and tilt the receptacle 130 forward to drop the contained rocks 132 in a region outside of the farmed area of the field.

In another aspect of some embodiments, the end effector 160 includes two or three paddles 180 that act like fingers to open and close, and enable the end effector 160 to grasp, *i*.*e*., acquire, the target rock 132 without significant contact with the soil, thereby minimizing any soil disturbance. In other aspects of some embodiments, the paddles 180 include multiple segments and may be hinged to enable additional degrees of freedom in the movement of the paddles 180. Additionally, in another aspect of some embodiments, one or more of the paddles 180 includes belts 190 that may move at varying speeds and alternating directions. This change in belt speed and direction, both as a group as well as individually, among the multiple paddles 180 assists not only with acquiring the target rock 132 or other object, but also with reorienting the target rock 132 or other object in the end effector 160 after it has been grasped by the paddles 180. Notably, in other embodiments, more than three paddles may be employed by an end effector 160. Additionally, in some embodiments, more than one hinge is included in one or more of the paddles 180, just like a human finger includes more than one joint for increased dexterity. Furthermore, in some embodiments, more than one belt 190 is included on one or more of the paddles 180. This enables a multi-belted paddle 180 to rotate, spin, or otherwise orient a target rock 132 or other object being acquired with greater dexterity.

In one or more embodiments, two paddles 180 of the end-effector 160 are aligned along the bottom (nearer to the ground and a target rock 132 to be acquired) and a hinged top paddle 180 is positioned along the top. In this embodiment, the end-effector 160 opens at the hinge to accommodate different sizes of rocks 132, and the belts 190 help pull the rock 132 into the paddles 180 upon contact with the target rock 132. Once the target rock 132 is acquired, the motion of the belts 190 also assists in transporting the rock 132 into the receptacle 130.

In some embodiments, the object-collection system 100 further includes a user input device 200 that provides operator control input from an operator on the ground vehicle to actuate the multiple degrees of freedom of the mechanical arm assembly 150 and to actuate the end-effector 160. The user input device 200 sends electrical or hydraulic control signals to drive electric or hydraulic actuators in the object-collection system 100.

When the object-collection system 100 is in use, the operator sees and reacts to rocks 132 or other objects in the field to be picked. At current speeds of the ground vehicle 110, this is practically efficient and within human reaction time. Standard combine harvester vehicle movement is typically in the velocity range of about 5 miles per hour or about 7 feet per second. Accordingly, the operator has sufficient reaction time to see and identify a target rock 132, actuate the multiple degrees of freedom of the mechanical arm assembly 150, and actuate the end-effector 160 to pick up rocks 132 (or other incoming obstacles) within the given closing time until the rocks 132 are reached.

In the ground vehicle 110, the cab where the operator sits provides a high degree of visibility of the ground plane afforded by the ground vehicle 110. Accordingly, the operator can typically visually identify and track rocks 132 or other small objects very effectively and manipulate the mechanical arm assembly 150 and position the end-effector 160 to contact and acquire with the rock. The mechanical arm assembly 150 and the end-effector 160 are controlled via user input device 200 (*e.g.*, joystick) from the operator in the cab of the ground vehicle 110 (*e.g.*, skid steer).

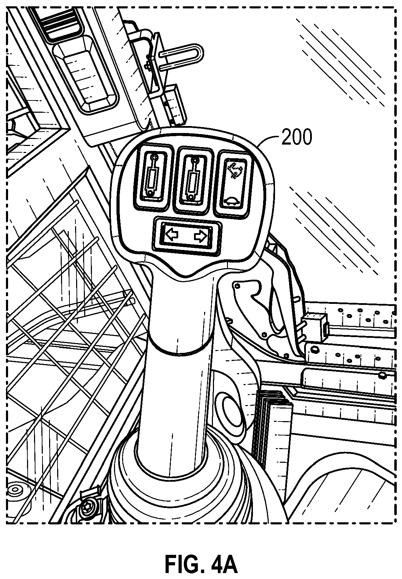

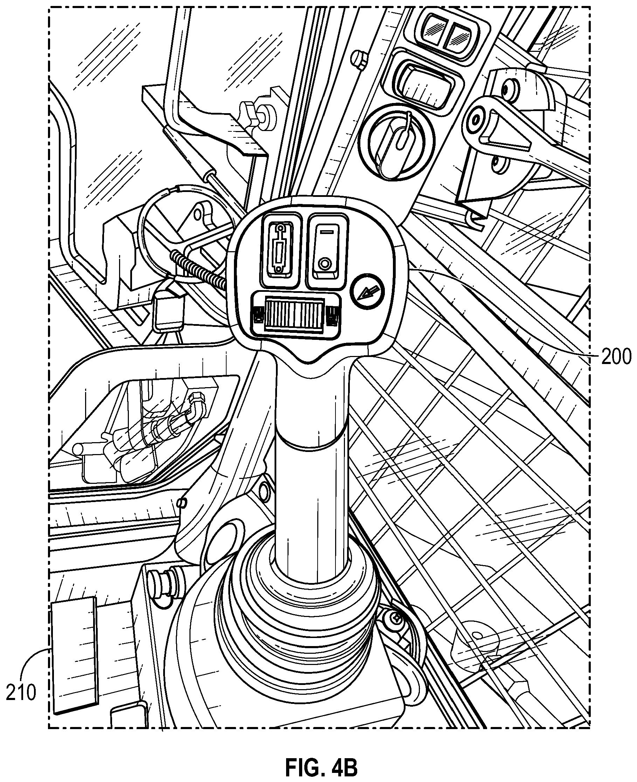

Referring now to figures 4A and 4B, a ground vehicle 110 (*e.g.*, skid steer) typically allows for control of implements via buttons on the two left and right (drive and front end loader control) joysticks. These buttons can be momentary switches, on/off switches, and auxiliary flow control dials to control hydraulic supply flow from the skid steer. In some embodiments, all such control input is made available to the control system 210 of the object-collection system 100 via a multi-pin electrical connector on the outside of the cab of the ground vehicle 110 (*e.g.*, skid steer). A custom harness may then be used to connect an implement control unit and/or the user input device 200 of the object-collection system 100 to the multi-pin connector. In some embodiments, the implement control unit and/or user input device 200 of the object-collection system 100 receives the operator input to the valve controllers and/or motor controllers. Various functions such as ramping, feedback control of the various degrees of freedom of the mechanical arm assembly 150, logging of operator input, and logging of machine state, may be achieved via the implement control unit or the user input device 200 sending signals to the control system 210 of the object-collection system 100.

Alternatively to using the native vehicle joystick, a dedicated user input device 200 (*e.g.*, custom joystick or thumb pad) may be attached on the existing vehicle controls allowing the operator to use it without taking her hands off the vehicle controls. The mapping of the user input device 200 (*e.g.*, custom joystick) to the various degrees of freedom of the mechanical arm assembly 150 can be easily configured as per operator preference.

Some embodiments of the object-collection system 100 enable the operator to control the position of the mechanical arm assembly 150 and the end-effector 160 relative to the ground surface using a front end loader of the receptacle 130. Alternatively to motion of the mechanical arm assembly 150 and the end-effector 160, the operator may also use the original front-end loader controls of the ground vehicle, including but not limited to the tilt of the receptacle 130, to move the end-effector 160 towards rocks 132 on the ground surface. In some embodiments, the object-collection system 100 is powered by the auxiliary hydraulic flow from the ground vehicle 110 (*e.g.*, skid steer). In other embodiments, electric actuation is used to provide electric power supply.

In some embodiments, the object-collection system 100 includes the ground vehicle 110; however, in other embodiments the object-collection system 100 is configured to be connected to a ground vehicle 110 that is not part of the system. In this regard, in some embodiments, the user input device 200 that sends electrical or hydraulic control signals to drive electric or hydraulic actuators in the object-collection system 100 is connected to the ground vehicle 110 and is not part of the original equipment of the ground vehicle 110. In other embodiments, the physical component of the ground vehicle 110 is incorporated into the user input device 200 by mapping control functionality to the physical component of the ground vehicle 110 that sends electrical or hydraulic control signals to drive electric or hydraulic actuators in the object-collection system 100.

Referring now to the control system 210 of the object-collection system 100, the control system 210 receives operator input from a user input device 200 (or other input means) by an operator on the ground vehicle to actuate the mechanical arm assembly 150 and the end-effector 160. The control system 210 includes a processor and a memory storing computer instructions that, when executed by the processor, cause the processor to perform actions including but not limited to: receive operator input to move the mechanical arm assembly; send instructions to actuators, motors, or both to move one or more segments of the mechanical arm assembly within one, two, or three degrees of freedom and position the end-effector; receive operator input to move one or more paddles of the end-effector; send instructions to actuators, motors, or both to move one or more paddles of the end-effector; receive operator input to move one or more belts on one or more paddles of the end-effector; and send instructions to actuators, motors, or both to move one or more belts on one or more paddles of the end-effector.

As stated above, in other embodiments of the object-collection system no control system is included. Since there is no controller intermediating user input to actuators in these embodiments, instead the user input device (*e*.*g*., joystick) directly sends an electrical signal with enough power (amperage) to directly actuate the electro-hydraulic valve the user input device is trying to control. Accordingly, such embodiments use this type of direct input to implement electro-hydraulic valves.

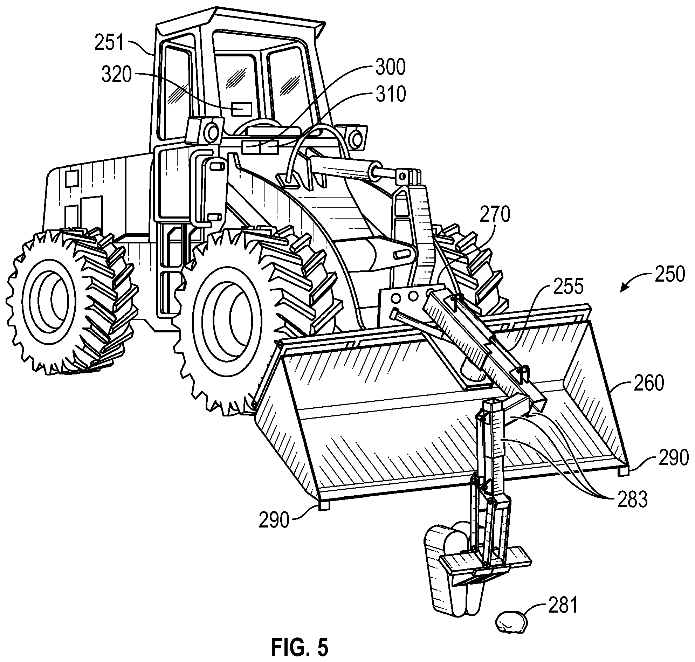

Referring now to FIGS. 5-12 generally and FIG. 5 specifically, in other implementations, the object-collection system 250 includes a vehicle 251 connected to one or more buckets 260, one or more cameras 270 operatively connected to the vehicle 251, one or more small object picking assemblies 280, one or more processors 300, and one or more memories 310. A small object picking assembly 280 is configured to pick up small objects 281 off of the ground. In some implementations, the small object picking assembly 280 is disposed at a front-end of the bucket 260. In other implementations, the small object picking assembly 280 is disposed at another section of the bucket 260, such as the top, side, or rear of the bucket 260. The small object picking assembly 280 may be connected directly to the front end of the bucket or may be connected to the front end of the bucket 260 via a linkage assembly. Correspondingly, the small object picking assembly 280 may be connected directly to the top, side, or rear of the bucket or may be connected to the top, side, or rear of the bucket 260 via a linkage assembly. In still other implementations, the small object picking assembly 280 is operatively associated with the bucket 260, but is actually connected, either directly or indirectly, to another part of the object-collection system 250, such as the vehicle 251.

Referring now to one aspect of the object-collection system 250, some embodiments of the system may additionally include one or more sensor arrays 290. The one or more sensor arrays, which will be described in further detail below, are used to assist with various functions of the object-collection system 250, including by way of example only, and not by way of limitation, monitoring the terrain being traversed by the object-collection system 250, monitoring the approaching small objects, monitoring the functionality of the object-collection system 250, and providing feedback on the success and efficiency of the object-collection system 250 in carrying out its assigned tasks.

In still another aspect of one implementation, the object-collection system 250 includes a control system with at least one or more processors 300 and one or more memories 310. The one or more memories 310 store computer instructions that are executed by the one or more processors 300 and cause the processors 300 to carry out various functions. In some implementations, these functions include, by way of example only, and not by way of limitation, obtaining small object information for each of one or more identified small objects; guiding the object-collection system over a target geographical area toward the one or more identified small objects based on the small object information; capturing, via the camera, a plurality of images of the ground relative to the object-collection system as the object-collection system is guided towards the one or more identified small objects; identifying a target small object in the plurality of images based on a dataset of known small object features; tracking movement of the target small object across the plurality of images as the object-collection system is guided towards the one or more identified small objects; and employing the tracked movement of the target small object to instruct the object-collection system to pick up the target small object.

It will be understood that in other implementations, only some of the above functions will be carried out by the one or more processors 300 and one or more memories 310 of the control system. It will also be understood that in still other implementations, more than the above functions will be carried out by the one or more processors 300 and one or more memories 310 of the control system. It will further be understood that in yet other implementations, alternative and additional functions will be carried out by the one or more processors 300 and one or more memories 310 of the control system. Moreover, it will be understood that in some implementations, the one or more processors 300 and one or more memories 310 of the control system are not actually part of the object-collection system 250, but rather are located outside of the system and are operatively associated with the object-collection system 250, enabling the transfer of information between the object-collection system 250 and the control system at its separate location.

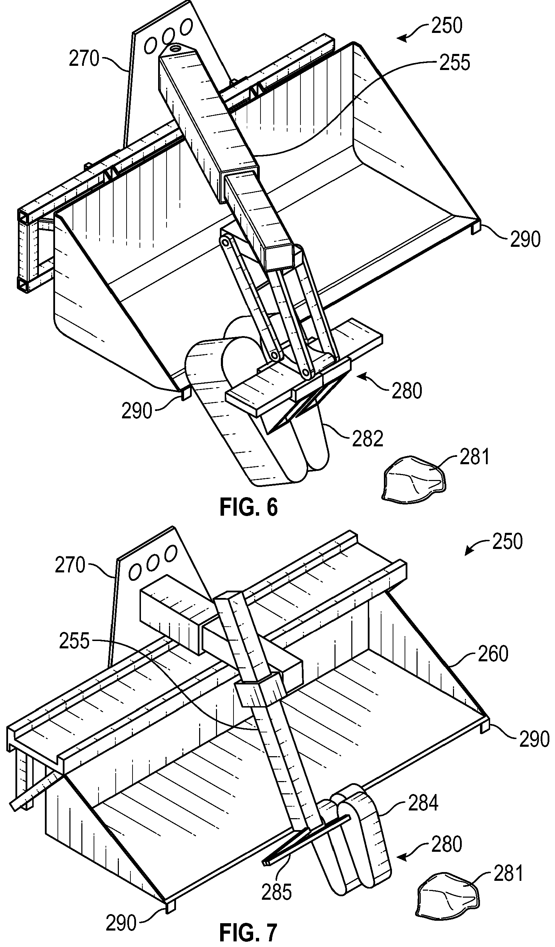

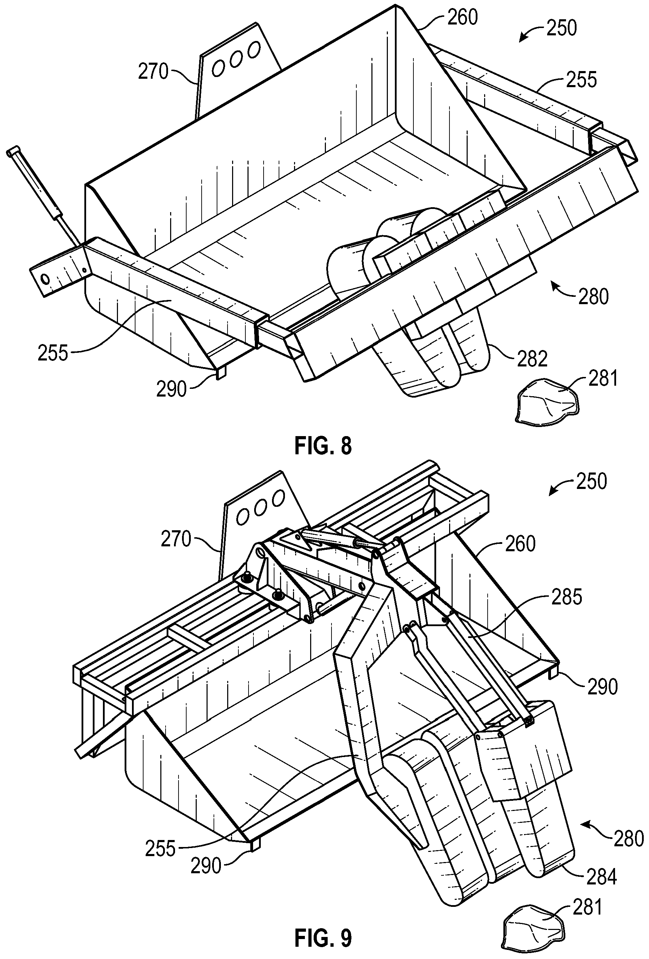

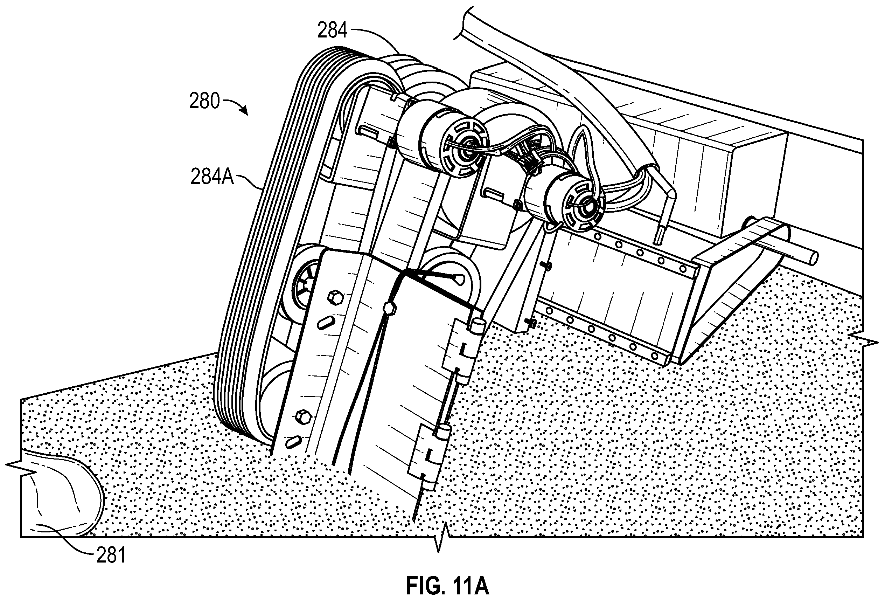

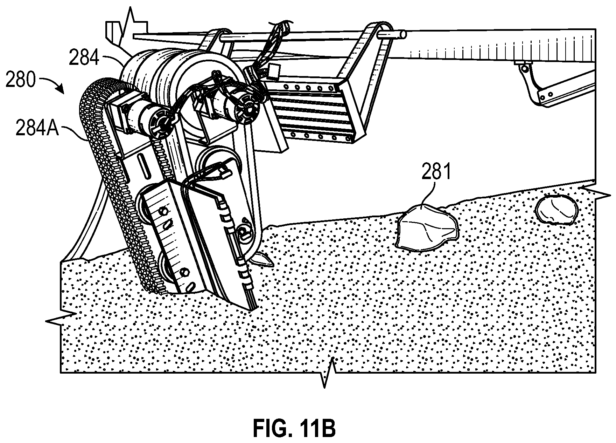

In other aspect of some implementations, the small object picking assembly 280 of the object-collection system 250 includes an end-effector with two or more paddle components 282, as shown in FIGS. 5, 6, and 8. Each of the two or more paddle components 282 of the object-collection system 250 has one or more moving belts 284A (see FIGS. 11-12). In another aspect of some implementations, the one or more moving belts 284A on each of the two or more paddle components 282 of the small object picking assembly 280 move along a path that pulls small objects in between the two or more paddle components 282. As shown in FIG. 5, in another aspect of some implementations, the two or more paddle components 282 of the small object picking assembly 280 include multiple joints 283 which enable repositioning of a small object after the small object has been picked up. Referring now to FIGS. 7 and 9, in still another aspect of some implementations, the two or more paddle components 282 of the small object picking assembly 280 include three paddle components 284. In such an implementation, at least one of the three paddle components 284 (but potentially two or more of the paddle components) includes a hinge 285 that enables a small object to be pinched so that it may be more easily picked up and manipulated. In yet another aspect of some implementations in which the two or more paddle components 282 of the small object picking assembly 280 include three paddle components 284, the first two of the paddle components are fixed in position with respect to each other, while the third paddle component is spaced apart from the first two of the paddle components. In some such implementations, only the third paddle component 284 includes a hinge 285 that enables small objects to be pinched so that they may be more easily picked up and manipulated.

Referring now FIGS. 5-10, in some implementations, the object-collection system 250 includes one or more sensor arrays 290 that determine whether or not the small object picking assembly 280 was successful in picking up a small object. In some implementations, the sensor array 290 includes one or more altitude sensors that determine the height distance between the ground and at least one of the small object picking assemblies with its associated bucket. This height distance determination is significant in that the height distance may be continuously changing as the vehicle 251 travels over uneven ground. In this regard, the height distance must be known so that the time needed for the small object picking assembly 280 to contact and pick up the small object (*e.g.*, rock, vegetable, fruit, mechanical object, natural object, and the like) may be determined. The time may be referred to as the sting time or strike time.

In other aspects of some implementations shown in FIGS. 5-10, the object-collection system 250 analyzes a plurality of images taken by the one or more cameras 270, identifies objects in the plurality of images, and tags false negatives. In this regard, a false negative may be defined as a small object 281 that was not included in one or more identified small objects in small object information that was obtained from another part of a related system. In some implementations, tagging a false negative includes dropping virtual pins at locations of the false negatives in stored mapping data.

In some implementations of the object-collection system 250, one or more small object picking assemblies 280 are operatively associated with the bucket 260 by using one or more picker arms 255 (*e.g.*, one picker arm in FIGS. 5-7 and 9-10, and two picker arms in FIG. 8) to manipulate the one or more small object picking assemblies 280 with respect to small objects 281 to be picked. In another aspect of some implementations, the one or more picker arms 255 have one or more degrees of freedom. In another aspect of some implementations, the one or more picker arms 255 are extendable, enabling the one or more small object picking assemblies 280 to move away from the bucket 260 and towards a small object 281 to be picked on the ground. Correspondingly, the one or more picker arms 255 are retractable, enabling the one or more small object picking assemblies 280 to move towards the bucket 260 and away from the ground after a small object 281 has been picked. Furthermore, in some implementations, the one or more picker arms 255 are extendable and retractable by one segment of one or more picker arms telescoping within another segment of the one or more picker arms.

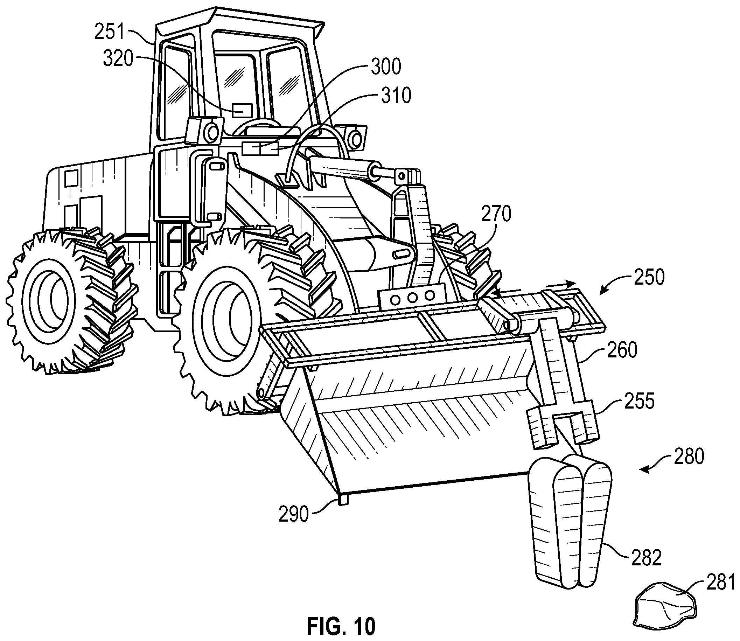

Additionally, some implementations the object-collection system 250 shown in FIGS. 5 and 10 further include an in-cab display screen 320 that presents a visual representation of the small objects 281 approaching the vehicle 251. In another aspect of the object-collection system 250 the control system is connected to the in-cab display screen 320 and generates the visual representation of the small objects 281 approaching the vehicle 251 from one or more of: the one or more identified small objects in small object information, the stored mapping data, and data collected from the one or more cameras 270, and the data collected from the one or more sensor arrays 290. In another aspect of some implementations, the vehicle 251 is driven autonomously along a determined path to pick up identified small objects 281 using information from one or more of: the one or more identified small objects in small object information, the stored mapping data, and data collected from the one or more cameras 270, and the data collected from the one or more sensor arrays 290.

In still another aspect of some implementations, small object picking success is confirmed using load sensors associated with the bucket 260. In yet another aspect of some implementations, small object picking success is confirmed using a three dimensional camera system and volumetric estimates. Moreover, in yet another aspect of some implementations, the object-collection system 250 includes a rear facing camera to identify small objects that were not picked up by the object-collection system.

In some implementations, the end effector 160 further includes mounted sensors on the end effector 160 itself. In various implementations, these sensors may include, by way of example only, and not by way of limitation, one or more of: proximity sensors, ultrasonic sensors, hinge-opening sensors, or hydraulic pressure sensors. These sensors may be positioned at the end effector belt motor circuits to determine the success of the acquisition of the target object. In other implementations, the one or more sensors measure load changes and/or torque changes on the mechanical arm assembly 150 to determine if an object has been successfully picked up, as well as to determine information about the object that has been picked up (*e.g.*, the weight of the object).

In another aspect of some implementations, the object-collection system 250 includes a control system with at least one or more processors 300 and one or more memories 310. The one or more memories 310 store computer instructions that are executed by the one or more processors 300 and cause the processors 300 to carry out various functions. In some implementations, these functions include, by way of example only, and not by way of limitation: obtain small object information for each of one or more identified small objects; guiding the object-collection system over a target geographical area toward the one or more identified small objects based on the small object information; receiving a plurality of images of the ground relative to the object-collection system as the object-collection system is guided towards the one or more identified small objects; identifying a target small object in the plurality of images based on a dataset of known small object features; tracking movement of the target small object across the plurality of images as the object-collection system is guided towards the one or more identified small objects; and employing the tracked movement of the target small object to instruct the object-collection system to pick up the target small object.

In some embodiments of the object-collection system, the user input device includes one or more of a joystick, an actuation button, and a control system. The actuation button triggers low level automation of a preprogrammed control system. In one embodiment of the object-collection system, the low level automation actions may include the combined functions of the mechanical arm assembly and the end-effector that are programmed into the system (*e*.*g*., a reaching action of the mechanical arm assembly and a picking action of the end-effector). The low level automation of combined functions of the mechanical arm assembly and the end-effector are reprogrammable. Nevertheless, in some embodiments, the timing of the reach and pick actions as well as the alignment of the object-collection system with the small object to be picked, would still be required by the skill of the operator. These low level automation command combinations are coded into the control system. These preprogrammed low level automation actions make the object-collection system able to be efficiently used by an operator with a low level of skill. These preprogrammed low level automation actions make the object-collection system useable with vehicles such as tractors. In some embodiments, the multiple combinations of combined functions are associated with the actuation button touch and release, and joystick motion (*e*.*g*., touch release; touch, joystick forward; touch, joystick backward, and the like).

In some embodiments, the actuation button and control system include a processor and a memory storing computer instructions that, when executed by the processor, cause the processor to: receive operator input via an actuation button that triggers low level automation of combined functions to move two or more of (1) the mechanical arm assembly, (2) one or more paddles of the end-effector, and (3) one or more belts on one or more paddles of the end-effector; and send instructions to actuators, motors, or both to move two or more of (1) the mechanical arm assembly, (2) one or more paddles of the end-effector, and (3) one or more belts on one or more paddles of the end-effector.

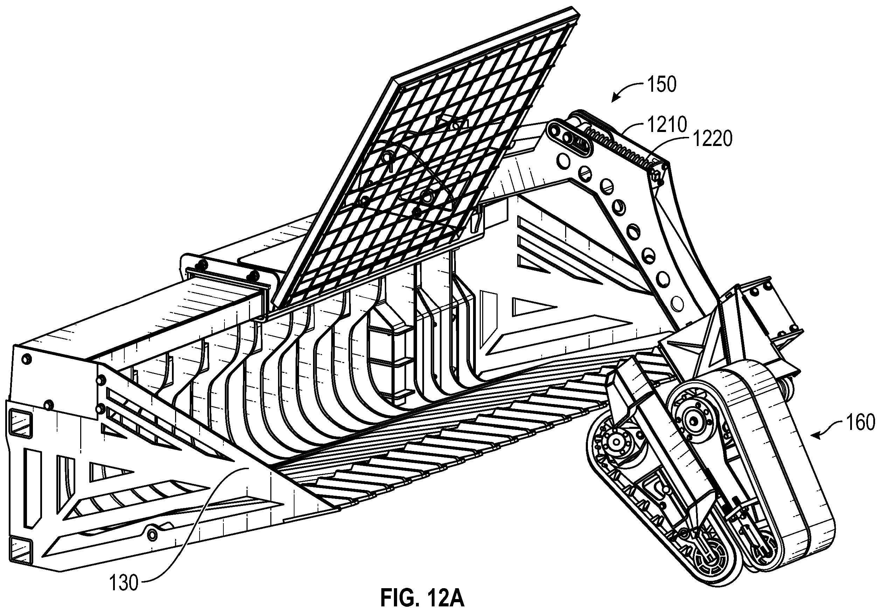

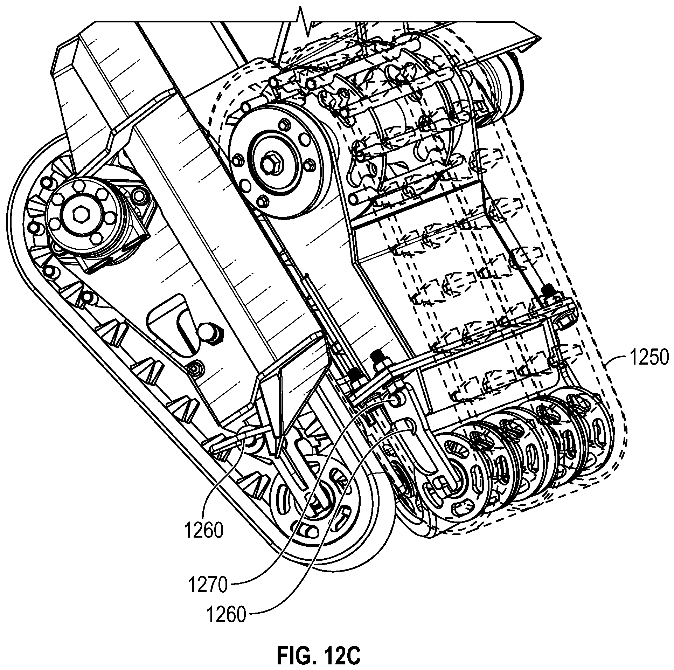

Referring now to Figure 12A, the mechanical arm assembly 150 includes a slot 1210 and spring assembly 1220 that provide flexibility to the mechanical arm assembly 150 and prevent damage due to the end-effector 160 impacting an immoveable object (*e.g.*, a very large rock). The slot 1210 and spring assembly 1220 enable the mechanical arm assembly 150 to recoil and spring back without breaking when hitting an immoveable object, particularly with significant speed. In some embodiments of the object-collection system, the receptacle 130 is integrated with the mechanical arm assembly 150, enabling the receptacle 130 to provide structural strength to the object-collection system in addition to its small object carrying capacity. The integration of the receptacle 130 with the mechanical arm assembly 150 also provides the technical improvement of moving the center of gravity closer to the vehicle. In some embodiments, the mechanical arm assembly 150 is a two piece assembly (*e*.*g*., a based piece and an end piece) so the end piece of the assembly may be swapped out as needed. In another aspect of some embodiments, the base piece of the mechanical arm assembly 150 raises the end-effector 160 up and down. In some embodiments of the mechanical arm assembly 150, the end piece can telescope to extend and retract, while in another embodiment of the mechanical arm assembly 150 the end piece does not telescope. In the embodiment of the object-collection system shown in Figure 12A, the carriage interface of the rail and carriage assembly is rectangular and travels on a rectangular rail surface, which provides additional structure strength and stability over a traditional round carriage on round bearings.

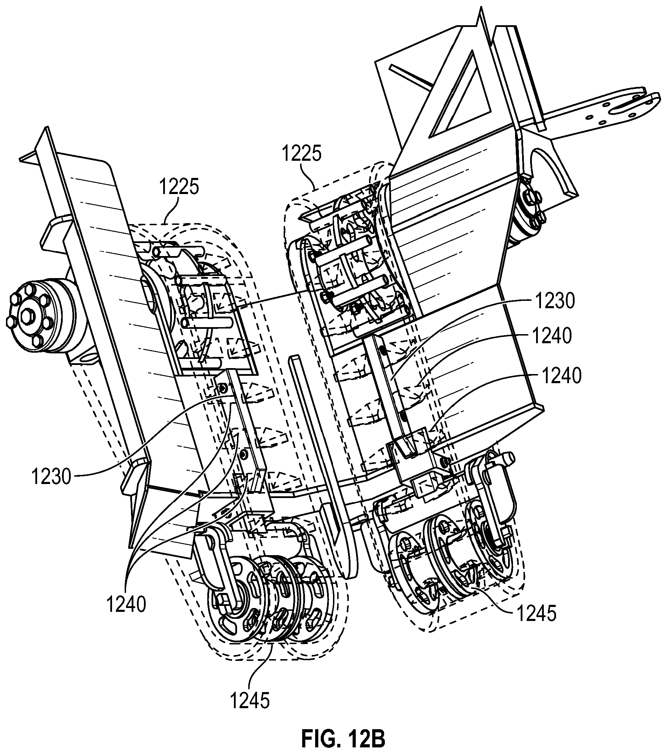

Referring now to Figure 12B, in some embodiments of the object-collection system, picking up objects while the vehicle is in motion often results in lateral forces on the belts 1225, which can cause derailment of the belts. A central guide rail 1230 is used to prevent this derailment of the belts 1225. In some embodiments, the central guide rail 1230 is made of UHMW (Ultra High Molecular Weight) or similar polymer material that is low friction and sits between two longitudinal rows of teeth 1240, reducing the chance for the side to side motion of the teeth 1240 that can result in derailment. In other embodiments, the central guide rail 1230 is made of other appropriate materials. The sprockets and idler wheels 1245 are also designed with outer and inner flanges to prevent teeth 1240 from moving out of position laterally.

Referring now to Figure 1C, the ability to replace belts in the field is a valuable technological improvement for rock picking to ensure that fully functional time (uptime) of the object-collection system is maximized, *i.e.*, that the object-collection system can be serviced in the field without returning to a workshop. In some embodiments of the object-collection system, the end-effector includes a pivoting idler assembly 1250 that can be released from the tensioned position by removing a pin 1260 and rotating about a pivoting point 1270. In the released and rotated position, the belts can be removed and replaced, and the assembly is rotated back into the lengthwise position to re-tension the belts for picking operation. Moreover, in some embodiments, the pivoting idler assembly 1250 itself is adjustable and can be lengthened to increase belt tension to accommodate belt stretching.

Notably, in other embodiments of the object-collection system no control system is included. Since there is no controller intermediating user input to actuators in these embodiments, instead the user input device (*e*.*g*., joystick) directly sends an electrical signal with enough power (amperage) to directly actuate the electro-hydraulic valve the user input device is trying to control. Accordingly, such embodiments use this type of direct input to implement electro-hydraulic valves.

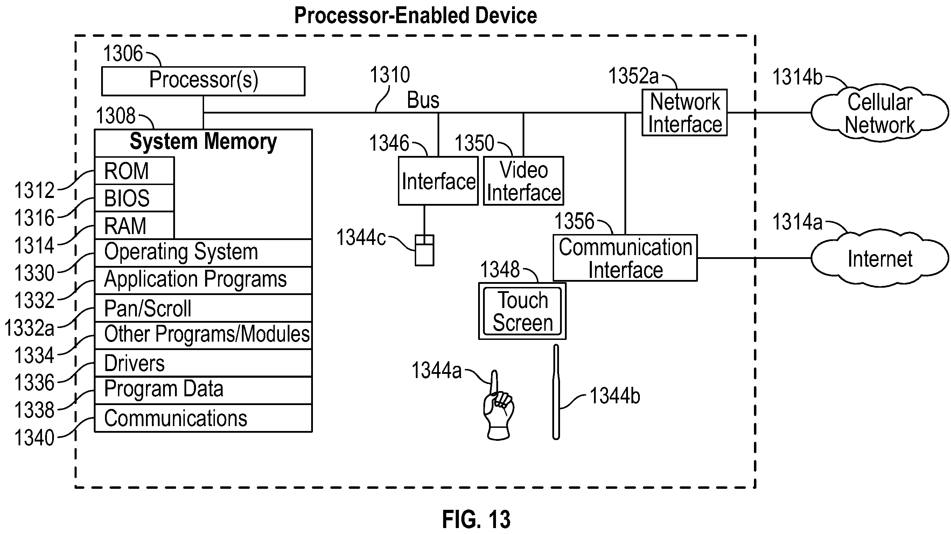

For use in conjunction with the object-collection system, Figure 13 shows a processor-based device suitable for implementing the object-collection system. Although not required, some portion of the implementations will be described in the general context of processor-executable instructions or logic, such as program application modules, objects, or macros being executed by one or more processors. Those skilled in the relevant art will appreciate that the described implementations, as well as other implementations, can be practiced with various processor-based system configurations, including handheld devices, such as smartphones and tablet computers, wearable devices, multiprocessor systems, microprocessor-based or programmable consumer electronics, personal computers ("PCs"), network PCs, minicomputers, mainframe computers, and the like.

In the object-collection system, the processor-based device may include one or more processors 1306, a system memory 1308, and a system bus 1310 that couples various system components including the system memory 1308 to the processor(s) 1306. The processor-based device will, at times, be referred to in the singular herein, but this is not intended to limit the implementations to a single system, since in certain implementations, there will be more than one system or other networked computing device involved. Non-limiting examples of commercially available systems include, but are not limited to, ARM processors from a variety of manufactures, Core microprocessors from Intel Corporation, U.S.A., PowerPC microprocessor from IBM, Sparc microprocessors from Sun Microsystems, Inc., PA-RISC series microprocessors from Hewlett-Packard Company, and 68xxx series microprocessors from Motorola Corporation. The system memory 1308 may be located on premises or it may be cloud based.

The processor(s) 1306 in the processor-based devices of the object-collection system may be any logic processing unit, such as one or more central processing units (CPUs), microprocessors, digital signal processors (DSPs), application-specific integrated circuits (ASICs), field programmable gate arrays (FPGAs), and the like. Unless described otherwise, the construction and operation of the various blocks shown in Figure 13 are of conventional design. As a result, such blocks need not be described in further detail herein, as they will be understood by those skilled in the relevant art.

The system bus 1310 in the processor-based devices of the object-collection system can employ any known bus structures or architectures, including a memory bus with memory controller, a peripheral bus, and a local bus. The system memory 1308 includes read-only memory ("ROM") 1312 and random access memory ("RAM") 1314. A basic input/output system ("BIOS") 1316, which can form part of the ROM 1312, contains basic routines that help transfer information between elements within processor-based device, such as during start-up. Some implementations may employ separate buses for data, instructions and power.

The processor-based device of the object-collection system may also include one or more solid state memories; for instance, a Flash memory or solid state drive (SSD), which provides nonvolatile storage of computer-readable instructions, data structures, program modules and other data for the processor-based device. Although not depicted, the processor-based device can employ other nontransitory computer- or processor-readable media, for example, a hard disk drive, an optical disk drive, or a memory card media drive.

Program modules in the processor-based devices of the object-collection system can be stored in the system memory 1308, such as an operating system 1330, one or more application programs 1332, other programs or modules 1334, drivers 1336, and program data 1338.

The application programs 1332 may, for example, include panning/scrolling logic 1332a. Such panning/scrolling logic may include, but is not limited to, logic that determines when and/or where a pointer (*e.g.*, finger, stylus, cursor) enters a user interface element that includes a region having a central portion and at least one margin. Such panning/scrolling logic may include, but is not limited to, logic that determines a direction and a rate at which at least one element of the user interface element should appear to move, and causes updating of a display to cause the at least one element to appear to move in the determined direction at the determined rate. The panning/scrolling logic 1332a may, for example, be stored as one or more executable instructions. The panning/scrolling logic 1332a may include processor and/or machine executable logic or instructions to generate user interface objects using data that characterizes movement of a pointer, for example, data from a touch-sensitive display or from a computer mouse or trackball, or other user interface device.

The system memory 1308 in the processor-based devices of the object-collection system may also include communications programs 1340, for example, a server and/or a Web client or browser for permitting the processor-based device to access and exchange data with other systems such as user computing systems, Web sites on the Internet, corporate intranets, or other networks as described below. The communications program 1340 in the depicted implementation is markup language based, such as Hypertext Markup Language (HTML), Extensible Markup Language (XML) or Wireless Markup Language (WML), and operates with markup languages that use syntactically delimited characters added to the data of a document to represent the structure of the document. A number of servers and/or Web clients or browsers are commercially available such as those from Mozilla Corporation of California and Microsoft of Washington.

While shown in Figure 13 as being stored in the system memory 1308, operating system 1330, application programs 1332, other programs/modules 1334, drivers 1336, program data 1338, and server and/or browser can be stored on any other of a large variety of nontransitory processor-readable media (*e*.*g*., hard disk drive, optical disk drive, SSD and/or flash memory).

A user of a processor-based device in the object-collection system can enter commands and information via a pointer, for example, through input devices such as a touch screen 1348 via a finger 1344a, stylus 1344b, or via a computer mouse or trackball 1344c which controls a cursor. Other input devices can include a microphone, joystick, game pad, tablet, scanner, biometric scanning device, and the like. These and other input devices (*i.e.*, "I/O devices") are connected to the processor(s) 1306 through an interface 1346, such as a touch-screen controller and/or a universal serial bus ("USB") interface, that couples user input to the system bus 1310, although other interfaces such as a parallel port, a game port, or a wireless interface or a serial port may be used. The touch screen 1348 can be coupled to the system bus 1310 via a video interface 1350, such as a video adapter to receive image data or image information for display via the touch screen 1348. Although not shown, the processor-based device can include other output devices, such as speakers, vibrator, haptic actuator or haptic engine, and the like.

The processor-based devices of the object-collection system operate in a networked environment using one or more of the logical connections to communicate with one or more remote computers, servers and/or devices via one or more communications channels, for example, one or more networks 1314a, 1314b. These logical connections may facilitate any known method of permitting computers to communicate, such as through one or more LANs and/or WANs, such as the Internet, and/or cellular communications networks. Such networking environments are well known in wired and wireless enterprise-wide computer networks, intranets, extranets, the Internet, and other types of communication networks including telecommunications networks, cellular networks, paging networks, and other mobile networks.

When used in a networking environment, the processor-based devices of the object-collection system may include one or more network, wired or wireless communications interfaces 1352a, 1356 (*e*.*g*., network interface controllers, cellular radios, WI-FI radios, Bluetooth radios) for establishing communications over the network, for instance, the Internet 1314a or cellular network 1314b.

In a networked environment, program modules, application programs, or data, or portions thereof, can be stored in a server computing system (not shown). Those skilled in the relevant art will recognize that the network connections shown in Figure 13 are only some examples of ways of establishing communications between computers, and other connections may be used, including wirelessly.

For convenience, the processor(s) 1306, system memory 1308, and network and communications interfaces 1352a, 1356 are illustrated as communicably coupled to each other via the system bus 1310, thereby providing connectivity between the above-described components. In alternative implementations of the processor-based device, the above-described components may be communicably coupled in a different manner than illustrated in Figure 13. For example, one or more of the above-described components may be directly coupled to other components, or may be coupled to each other, via intermediary components (not shown). In some implementations, system bus 1310 is omitted, and the components are coupled directly to each other using suitable connections.

Throughout this specification and the appended claims the term "communicative" as in "communicative pathway," "communicative coupling," and in variants such as "communicatively coupled," is generally used to refer to any engineered arrangement for transferring and/or exchanging information. Exemplary communicative pathways include, but are not limited to, electrically conductive pathways (*e*.*g*., electrically conductive wires, electrically conductive traces), magnetic pathways (*e*.*g*., magnetic media), one or more communicative link(s) through one or more wireless communication protocol(s), and/or optical pathways (*e*.*g*., optical fiber), and exemplary communicative couplings include, but are not limited to, electrical couplings, magnetic couplings, wireless couplings, and/or optical couplings.

Throughout this specification and the appended claims, infinitive verb forms are often used. Examples include, without limitation: "to detect," "to provide," "to transmit," "to communicate," "to process," "to route," and the like. Unless the specific context requires otherwise, such infinitive verb forms are used in an open, inclusive sense, that is as "to, at least, detect," to, at least, provide," "to, at least, transmit," and so on.

The above description of illustrated implementations, including what is described in the Abstract, is not intended to be exhaustive or to limit the implementations to the precise forms disclosed. Although specific implementations of and examples are described herein for illustrative purposes, various equivalent modifications can be made without departing from the scope of the disclosure, as will be recognized by those skilled in the relevant art. The teachings provided herein of the various implementations can be applied to other portable and/or wearable electronic devices, not necessarily the exemplary wearable electronic devices generally described above.

For instance, the foregoing detailed description has set forth various implementations of the devices and/or processes via the use of block diagrams, schematics, and examples. Insofar as such block diagrams, schematics, and examples contain one or more functions and/or operations, it will be understood by those skilled in the art that each function and/or operation within such block diagrams, flowcharts, or examples can be implemented, individually and/or collectively, by a wide range of hardware, software, firmware, or virtually any combination thereof. In one implementation, the present subject matter may be implemented via Application Specific Integrated Circuits (ASICs). However, those skilled in the art will recognize that the implementations disclosed herein, in whole or in part, can be equivalently implemented in standard integrated circuits, as one or more computer programs executed by one or more computers (*e*.*g*., as one or more programs running on one or more computer systems), as one or more programs executed by one or more controllers (*e*.*g*., microcontrollers) as one or more programs executed by one or more processors (*e*.*g*., microprocessors, central processing units, graphical processing units), as firmware, or as virtually any combination thereof, and that designing the circuitry and/or writing the code for the software and or firmware would be well within the skill of one of ordinary skill in the art in light of the teachings of this disclosure.

When logic is implemented as software and stored in memory, logic or information can be stored on any processor-readable medium for use by or in connection with any processor-related system or method. In the context of this disclosure, a memory is a processor-readable medium that is an electronic, magnetic, optical, or other physical device or means that contains or stores a computer and/or processor program. Logic and/or the information can be embodied in any processor-readable medium for use by or in connection with an instruction execution system, apparatus, or device, such as a computer-based system, processor-containing system, or other system that can fetch the instructions from the instruction execution system, apparatus, or device and execute the instructions associated with logic and/or information.

In the context of this specification, a "non-transitory processor-readable medium" can be any element that can store the program associated with logic and/or information for use by or in connection with the instruction execution system, apparatus, and/or device. The processor-readable medium can be, for example, but is not limited to, an electronic, magnetic, optical, electromagnetic, infrared, or semiconductor system, apparatus or device. More specific examples (a non-exhaustive list) of the computer readable medium would include the following: a portable computer diskette (magnetic, compact flash card, secure digital, or the like), a random access memory (RAM), a read-only memory (ROM), an erasable programmable read-only memory (EPROM, EEPROM, or Flash memory), a portable compact disc read-only memory (CDROM), digital tape, and other non-transitory media.

Operations of processes described herein can be performed in any suitable order unless otherwise indicated herein or otherwise clearly contradicted by context. The processes described herein (or variations and/or combinations thereof) are performed under the control of one or more computer systems configured with executable instructions and are implemented as code (*e*.*g*., executable instructions, one or more computer programs or one or more applications) executing collectively on one or more processors, by hardware or combinations thereof. In an embodiment, the code is stored on a computer-readable storage medium, for example, in the form of a computer program comprising a plurality of instructions executable by one or more processors. In an embodiment, a computer-readable storage medium is a non-transitory computer-readable storage medium that excludes transitory signals (*e.g.*, a propagating transient electric or electromagnetic transmission) but includes non-transitory data storage circuitry (*e*.*g*., buffers, cache, and queues) within transceivers of transitory signals. In an embodiment, code (*e*.*g*., executable code or source code) is stored on a set of one or more non-transitory computer-readable storage media having stored thereon executable instructions that, when executed (*i.e.*, as a result of being executed) by one or more processors of a computer system, cause the computer system to perform operations described herein. The set of non-transitory computer-readable storage media, in an embodiment, comprises multiple non-transitory computer-readable storage media, and one or more of individual non-transitory storage media of the multiple non-transitory computer-readable storage media lacks all of the code while the multiple non-transitory computer-readable storage media collectively store all of the code. In an embodiment, the executable instructions are executed such that different instructions are executed by different processors - for example, a non-transitory computer-readable storage medium stores instructions and a main CPU executes some of the instructions while a graphics processor unit executes other instructions. In an embodiment, different components of a computer system have separate processors, and different processors execute different subsets of the instructions.

Accordingly, in an embodiment, computer systems are configured to implement one or more services that singly or collectively perform operations of processes described herein, and such computer systems are configured with applicable hardware and/or software that enable the performance of the operations.

The various embodiments described above can be combined to provide further embodiments, as long as they fall within the scope of the invention which is defined by the appended claims. These and other changes can be made to the embodiments in light of the above-detailed description.

## Claims

1. An object collection system (100) for collecting small objects off of a ground surface, the system including:
a mechanical arm assembly (150) with multiple degrees of freedom that is configured to pick up small objects off of the ground surface, the mechanical arm assembly having a proximal end and a distal end;
a receptacle (130) for holding small objects picked up by the mechanical arm assembly (150);
an end-effector (160) positioned at the proximal end of the mechanical arm assembly (150) that is configured to grasp and acquire small objects from the ground surface; and
a user input device (200) is configured to provide operator control input from an operator on a ground vehicle (110) to actuate the multiple degrees of freedom of the mechanical arm assembly (150) and to actuate the end-effector (160), wherein user input signals from the user input device (200) control electric or hydraulic actuators in the object collection system (100);
**characterized in that**
the object collection system further comprises a preprogrammed control system,
wherein the user input device (200) is configured to receive operator input via an actuation button that triggers low level automation of the preprogrammed control system,
wherein the low level automation is a combined automation of the mechanical arm assembly (150), one or more paddles (180) of the end-effector (160), and one or more belts (190) on one or more paddles (180) of the end-effector (160), to control timing of reach and pick actions of the mechanical arm assembly (150), and the alignment of the system with the small object to be picked.

2. The system of claim 1, wherein the end-effector (160) includes two or more paddles (180) with one or more moving belts (190) on each of the two or more paddles (180).

3. The system of claim 2, wherein the one or more moving belts on each of the two or more paddles (180) of the end-effector (160) move to pull the objects in between the two or more paddles (180).

4. The system of claim 2, wherein the two or more paddles (180) of the end-effector (160) include multiple joints which enable repositioning of an object after the object has been picked up.

5. The system of claim 2, wherein the two or more paddles (180) of the end-effector (160) include three paddles (180), and wherein at least one of the three paddles (180) includes a hinge that enables an object to be pinched.

6. The system of claim 2, wherein the two or more paddles (180) of the end-effector (160) include three paddles (180), wherein a first two of the paddles (180) are fixed in position with respect to each other, and a third paddles (180) is spaced apart from the first two of the paddles (180), and wherein the third paddles (180) includes a hinge that enables an object to be pinched.

7. The system of claim 1, wherein the user input device (200) is: (1) an actuation button that triggers combined functions of the mechanical arm assembly (150) and the end-effector (160) that are programmed into the system (100) or (2) multiple actuation buttons or joystick inputs that trigger functions of the mechanical arm assembly (150) and the end-effector (160) that are programmed into the system (100).

8. The system of claim 1, wherein the combined functions of the mechanical arm assembly (150) and the end-effector (160) that are programmed into the system (100) include: (1) a reaching action of the mechanical arm assembly (150) and a picking action of the end-effector (160) or (2) an aligning action of the mechanical arm assembly (150), a reaching action of the mechanical arm assembly (150), and a picking action of the end-effector (160).

9. The system of claim 1, further comprising a control system including a processor and a memory storing computer instructions that, when executed by the processor, cause the processor to:
receive operator input to move a carriage along a rail and carriage assembly to align the mechanical arm assembly with the object to be picked; and
send instructions to actuators, motors, or both to move the carriage along the rail and carriage assembly.

10. The system of claim 1, further comprising a control system including a processor and a memory storing computer instructions that, when executed by the processor, cause the processor to:
receive operator input to move the mechanical arm assembly (150); and
send instructions to actuators, motors, or both to move one or more segments of the mechanical arm assembly (150) within one, two, or three degrees of freedom and position the end-effector (160).

11. The system of claim 1, further comprising a control system including a processor and a memory storing computer instructions that, when executed by the processor, cause the processor to:
receive operator input to move one or more paddles (180) of the end-effector (160); and
send instructions to actuators, motors, or both to move one or more paddles (180) of the end-effector (160).

12. The system of claim 1, further comprising a control system including a processor and a memory storing computer instructions that, when executed by the processor, cause the processor to:
receive operator input to move one or more belts on one or more paddles (180) of the end-effector (160); and
send instructions to actuators, motors, or both to move one or more belts on one or more paddles (180) of the end-effector (160).

13. The system of claim 1, further comprising a control system including a processor and a memory storing computer instructions that, when executed by the processor, cause the processor to:
receive operator input via an actuation button that triggers combined functions to move two or more of (1) the mechanical arm assembly (150), (2) one or more paddles (180) of the end-effector (160), and (3) one or more belts on one or more paddles (180) of the end-effector (160); and
send instructions to actuators, motors, or both to move two or more of (1) the mechanical arm assembly (150), (2) one or more paddles (180) of the end-effector (160), and (3) one or more belts on one or more paddles (180) of the end-effector (160).

14. The system of claim 13, wherein the one or more paddles of the end-effector (160) each include a central guide rail that is positioned between two longitudinal rows of teeth that prevent derailment of the belts on the one or more paddles (180).

15. The system of claim 1, wherein the end-effector (160) includes a belt and pivoting idler assembly that is released from a tensioned position by removing a pin and rotating about a pivoting point, wherein the belt is removable and replaceable while the pivoting idler assembly is in an un-tensioned position.

## Patentansprüche

1. Objektsammelsystem (100) zum Sammeln kleiner Objekte von einer Bodenoberfläche, wobei das System umfasst:
eine mechanische Armanordnung (150) mit mehreren Freiheitsgraden, die so konfiguriert ist, dass sie kleine Gegenstände von der Bodenoberfläche aufnimmt, wobei die mechanische Armanordnung ein proximales Ende und ein distales Ende aufweist;
einen Behälter (130) zum Aufnehmen kleiner Objekte, die von der mechanischen Armanordnung (150) aufgesammelt wurden;
einen am proximalen Ende der mechanischen Armanordnung (150) angeordneten Endeffektor (160), der dazu ausgestaltet ist, kleine Objekte von der Bodenoberfläche zu ergreifen und aufzunehmen; und
ein Benutzereingabegerät (200), das so konfiguriert ist, dass es Bedienereingaben von einem Bediener in einem Bodenfahrzeug (110) bereitstellt, um die mehreren Freiheitsgrade der mechanischen Armanordnung (150) zu aktivieren und den Endeffektor (160) zu aktivieren, wobei Benutzereingabesignale vom Benutzereingabegerät (200) elektrische oder hydraulische Aktuatoren im Objektsammelsystem (100) steuern;
**dadurch gekennzeichnet, dass**
das Objektsammelsystem ferner ein vorprogrammiertes Steuerungssystem umfasst,
wobei das Benutzereingabegerät (200) so konfiguriert ist, dass es eine Bedienereingabe über einen Betätigungsknopf empfängt, die eine Low-Level-Automatisierung des vorprogrammierten Steuerungssystems auslöst,
wobei die Low-Level-Automatisierung eine kombinierte Automatisierung der mechanischen Armanordnung (150), eines oder mehrerer Paddel (180) des Endeffektors (160) und eines oder mehrerer Riemen (190) an einem oder mehreren Paddeln (180) des Endeffektors (160) darstellt, um einen zeitlichen Ablauf der Streck- und Greifvorgänge der mechanischen Armbaugruppe (150) und ein Ausrichten des Systems auf das aufzunehmende kleine Objekt zu steuern.

2. System nach Anspruch 1, wobei der Endeffektor (160) zwei oder mehr Paddel (180) aufweist, wobei sich auf jedem der zwei oder mehr Paddel (180) ein oder mehrere bewegliche Riemen (190) befinden.

3. System nach Anspruch 2, wobei sich der eine oder die mehreren beweglichen Riemen an jedem der zwei oder mehr Paddel (180) des Endeffektors (160) bewegen, um die Objekte zwischen die zwei oder mehr Paddel (180) zu ziehen.

4. System nach Anspruch 2, wobei die zwei oder mehr Paddel (180) des Endeffektors (160) mehrere Gelenke aufweisen, die eine Neupositionierung eines Objekts ermöglichen, nachdem das Objekt aufgenommen wurde.

5. System nach Anspruch 2, wobei die zwei oder mehr Paddel (180) des Endeffektors (160) drei Paddel (180) aufweisen und wobei mindestens eines der drei Paddel (180) ein Scharnier aufweist, das das Einklemmen eines Objekts ermöglicht.

6. System nach Anspruch 2, wobei die zwei oder mehr Paddel (180) des Endeffektors (160) drei Paddel (180) aufweisen, wobei zwei der Paddel (180) relativ zueinander in ihrer Position fixiert sind und ein drittes Paddel (180) von den ersten beiden Paddeln (180) beabstandet ist, und wobei das dritte Paddel (180) ein Scharnier aufweist, das das Einklemmen eines Objekts ermöglicht.

7. System nach Anspruch 1, wobei die Benutzereingabevorrichtung (200) Folgendes umfasst: (1) eine Betätigungstaste, die kombinierte Funktionen der mechanischen Armanordnung (150) und des Endeffektors (160) auslöst, die in das System (100) programmiert sind, oder (2) mehrere Betätigungstasten oder Joystick-Eingaben, die Funktionen der mechanischen Armanordnung (150) und des Endeffektors (160) auslösen, die in das System (100) programmiert sind.

8. System nach Anspruch 1, wobei die in das System (100) programmierten kombinierten Funktionen der mechanischen Armbaugruppe (150) und des Endeffektors (160) Folgendes umfassen: (1) einen Streckvorgang der mechanischen Armbaugruppe (150) und einen Greifvorgang des Endeffektors (160) oder (2) einen Ausrichtungsvorgang der mechanischen Armbaugruppe (150), einen Streckvorgang der mechanischen Armbaugruppe (150) und einen Greifvorgang des Endeffektors (160).

9. System nach Anspruch 1, ferner mit einem Steuersystem, das einen Prozessor und einen Speicher aufweist, in dem Computerbefehle gespeichert sind, die, wenn sie vom Prozessor ausgeführt werden, den Prozessor veranlassen:
Bedienereingaben zu empfangen, um einen Schlitten entlang einer Schienen- und Schlittenbaugruppe zu bewegen, um die mechanische Armbaugruppe mit dem aufzuhebenden Objekt auszurichten; und
Befehle an Aktuatoren, Motoren oder beides zu senden, um den Schlitten entlang der Schienen- und Schlittenbaugruppe zu bewegen.

10. System nach Anspruch 1, ferner mit einem Steuersystem, das einen Prozessor und einen Speicher enthält, in dem Computerbefehle gespeichert sind, die, wenn sie vom Prozessor ausgeführt werden, den Prozessor veranlassen:
Bedienereingaben zu empfangen, um die mechanische Armanordnung (150) zu bewegen; und
Befehle an Aktuatoren, Motoren oder beides zu senden, um ein oder mehrere Segmente der mechanischen Armanordnung (150) innerhalb von einem, zwei oder drei Freiheitsgraden zu bewegen und den Endeffektor (160) zu positionieren.

11. System nach Anspruch 1, ferner mit einem Steuersystem, das einen Prozessor und einen Speicher aufweist, in dem Computerbefehle gespeichert sind, die, wenn sie vom Prozessor ausgeführt werden, den Prozessor veranlassen:
Bedienereingaben zu empfangen, um ein oder mehrere Paddel (180) des Endeffektors (160) zu bewegen; und
Befehle an Aktuatoren, Motoren oder beides zu senden, um ein oder mehrere Paddel (180) des Endeffektors (160) zu bewegen.

12. System nach Anspruch 1, ferner mit einem Steuersystem, das einen Prozessor und einen Speicher aufweist, in dem Computerbefehle gespeichert sind, die, wenn sie vom Prozessor ausgeführt werden, den Prozessor veranlassen:
Bedienereingaben zu empfangen, um einen oder mehrere Riemen an einem oder mehreren Paddeln (180) des Endeffektors (160) zu bewegen; und
Befehle an Aktuatoren, Motoren oder beides zu senden, um einen oder mehrere Riemen an einem oder mehreren Paddeln (180) des Endeffektors (160) zu bewegen.

13. System nach Anspruch 1, ferner mit einem Steuersystem, das einen Prozessor und einen Speicher aufweist, in dem Computerbefehle gespeichert sind, die, wenn sie vom Prozessor ausgeführt werden, den Prozessor veranlassen:
Bedienereingaben über eine Betätigungstaste zu empfangen, die kombinierte Funktionen auslöst, um zwei oder mehr der folgenden Elemente zu bewegen: (1) die mechanische Armbaugruppe (150), (2) ein oder mehrere Paddel (180) des Endeffektors (160) und (3) einen oder mehrere Riemen an einem oder mehreren Paddeln (180) des Endeffektors (160); und
Anweisungen an Aktuatoren, Motoren oder beides zu senden, um zwei oder mehr der folgenden Elemente zu bewegen: (1) die mechanische Armbaugruppe (150), (2) ein oder mehrere Paddel (180) des Endeffektors (160) und (3) einen oder mehrere Riemen an einem oder mehreren Paddeln (180) des Endeffektors (160).

14. System nach Anspruch 13, wobei die eine oder mehreren Paddeln des Endeffektors (160) jeweils eine zentrale Führungsschiene aufweisen, die zwischen zwei Längsreihen von Zähnen angeordnet ist, die ein Entgleisen der Riemen auf der einen oder den mehreren Paddeln (180) verhindern.

15. System nach Anspruch 1, wobei der Endeffektor (160) eine Riemen- und Schwenkrollenbaugruppe aufweist, die durch Entfernen eines Stifts und Drehen um einen Drehpunkt aus einer gespannten Position gelöst wird, wobei der Riemen entfernbar und austauschbar ist, während sich die Schwenkrollenbaugruppe in einer entspannten Position befindet.

## Revendications

1. Système de collecte d'objets (100) permettant de collecter de petits objets à partir d'une surface au sol, le système incluant :
un ensemble bras mécanique (150) doté de plusieurs degrés de liberté qui est configuré pour ramasser de petits objets de la surface au sol, l'ensemble bras mécanique présentant une extrémité proximale et une extrémité distale ;
un réceptacle (130) destiné à contenir des petits objets ramassés par l'ensemble bras mécanique (150) ;
un organe effecteur (160) positionné au niveau de l'extrémité proximale de l'ensemble bras mécanique (150) qui est configuré pour saisir et acquérir de petits objets à partir de la surface au sol ; et
un dispositif d'entrée d'utilisateur (200) est configuré pour fournir une entrée de commande d'opérateur en provenance d'un opérateur sur un véhicule au sol (110) pour actionner les multiples degrés de liberté de l'ensemble bras mécanique (150) et pour actionner l'organe effecteur (160), dans lequel des signaux d'entrée d'utilisateur en provenance du dispositif d'entrée d'utilisateur (200) commandent des actionneurs électriques ou hydrauliques dans le système de collecte d'objets (100) ;
**caractérisé en ce que**
le système de collecte d'objets comprend en outre un système de commande préprogrammé,
dans lequel le dispositif d'entrée d'utilisateur (200) est configuré pour recevoir une entrée d'opérateur via un bouton d'actionnement qui déclenche une automatisation de bas niveau du système de commande préprogrammé,
dans lequel l'automatisation de bas niveau est une automatisation combinée de l'ensemble bras mécanique (150), d'une ou de plusieurs palettes (180) de l'organe effecteur (160) et d'une ou de plusieurs courroies (190) sur une ou plusieurs palettes (180) de l'organe effecteur (160), pour commander la temporisation des actions d'atteinte et de ramassage de l'ensemble bras mécanique (150) et l'alignement du système avec le petit objet à ramasser.

2. Système selon la revendication 1, dans lequel l'organe effecteur (160) inclut deux ou plus de deux palettes (180) avec une ou plusieurs courroies mobiles (190) sur chacune des deux ou plus de deux palettes (180).

3. Système selon la revendication 2, dans lequel les une ou plusieurs courroies mobiles sur chacune des deux ou plus de deux palettes (180) de l'organe effecteur (160) se déplacent pour tirer les objets entre les deux ou plus de deux palettes (180).

4. Système selon la revendication 2, dans lequel les deux ou plus de deux palettes (180) de l'organe effecteur (160) incluent plusieurs articulations qui permettent le repositionnement d'un objet après que l'objet a été ramassé.

5. Système selon la revendication 2, dans lequel les deux ou plus de deux palettes (180) de l'organe effecteur (160) comportent trois palettes (180), et dans lequel au moins l'une des trois palettes (180) inclut une charnière qui permet de pincer un objet.

6. Système selon la revendication 2, dans lequel les deux ou plus de deux palettes (180) de l'organe effecteur (160) incluent trois palettes (180), dans lequel deux premières palettes (180) sont fixées en position par rapport à l'autre, et une troisième palette (180) est espacée des deux premières palettes (180), et dans lequel les troisièmes palettes (180) incluent une charnière qui permet de pincer un objet.

7. Système selon la revendication 1, dans lequel le dispositif d'entrée d'utilisateur (200) est : (1) un bouton d'actionnement qui déclenche des fonctions combinées de l'ensemble bras mécanique (150) et de l'organe effecteur (160) qui sont programmées dans le système (100) ou (2) de multiples boutons d'actionnement ou entrées de leviers de commande qui déclenchent des fonctions de l'ensemble bras mécanique (150) et de l'organe effecteur (160) qui sont programmées dans le système (100).

8. Système selon la revendication 1, dans lequel les fonctions combinées de l'ensemble bras mécanique (150) et de l'organe effecteur (160) qui sont programmées dans le système (100) incluent : (1) une action d'atteinte de l'ensemble bras mécanique (150) et une action de ramassage de l'organe effecteur (160) ou (2) une action d'alignement de l'ensemble bras mécanique (150), une action d'atteinte de l'ensemble bras mécanique (150) et une action de ramassage de l'organe effecteur (160).

9. Système selon la revendication 1, comprenant en outre un système de commande incluant un processeur et une mémoire stockant des instructions informatiques qui, lorsqu'elles sont exécutées par le processeur, amènent le processeur à :
recevoir une entrée d'opérateur pour déplacer un chariot le long d'un ensemble rail et chariot pour aligner l'ensemble bras mécanique avec l'objet à ramasser ; et
envoyer des instructions à des actionneurs, à des moteurs ou aux deux pour déplacer le chariot le long de l'ensemble rail et chariot.

10. Système selon la revendication 1, comprenant en outre un système de commande incluant un processeur et une mémoire stockant des instructions informatiques qui, lorsqu'elles sont exécutées par le processeur, amènent le processeur à :
recevoir une entrée d'actionneur pour déplacer l'ensemble bras mécanique (150) ; et
envoyer des instructions à des actionneurs, à des moteurs ou aux deux pour déplacer un ou plusieurs segments de l'ensemble bras mécanique (150) sous un, deux ou trois degrés de liberté et positionner l'organe effecteur (160).

11. Système selon la revendication 1, comprenant en outre un système de commande incluant un processeur et une mémoire stockant des instructions informatiques qui, lorsqu'elles sont exécutées par le processeur, amènent le processeur à :
recevoir une entrée d'opérateur pour déplacer une ou plusieurs palettes (180) de l'organe effecteur (160) ; et
envoyer des instructions à des actionneurs, à des moteurs ou aux deux pour déplacer une ou plusieurs palettes (180) de l'organe effecteur (160).

12. Système selon la revendication 1, comprenant en outre un système de commande incluant un processeur et une mémoire stockant des instructions informatiques qui, lorsqu'elles sont exécutées par le processeur, amènent le processeur à :
recevoir une entrée d'opérateur pour déplacer une ou plusieurs courroies sur une ou plusieurs palettes (180) de l'organe effecteur (160) ; et
envoyer des instructions à des actionneurs, à des moteurs ou aux deux pour déplacer une ou plusieurs courroies sur une ou plusieurs palettes (180) de l'organe effecteur (160).

13. Système selon la revendication 1, comprenant en outre un système de commande incluant un processeur et une mémoire stockant des instructions informatiques qui, lorsqu'elles sont exécutées par le processeur, amènent le processeur à :
recevoir une entrée d'opérateur via un bouton d'actionnement qui déclenche des fonctions combinées pour déplacer deux ou plus de deux éléments parmi (1) l'ensemble bras mécanique (150), (2) une ou plusieurs palettes (180) de l'organe effecteur (160) et (3) une ou plusieurs courroies sur une ou plusieurs palettes (180) de l'organe effecteur (160) ; et
envoyer des instructions à des actionneurs, à des moteurs, ou aux deux pour déplacer deux ou plus de deux éléments parmi (1) l'ensemble bras mécanique (150), (2) une ou plusieurs palettes (180) de l'organe effecteur (160) et (3) une ou plusieurs courroies sur une ou plusieurs palettes (180) de l'organe effecteur (160).

14. Système selon la revendication 13, dans lequel les une ou plusieurs palettes de l'organe effecteur (160) incluent chacune un rail de guidage central qui est positionné entre deux rangées longitudinales de dents qui empêchent le déraillement des courroies sur la ou les palettes (180).

15. Système selon la revendication 1, dans lequel l'organe effecteur (160) inclut une courroie et un ensemble roue folle pivotante qui est libéré d'une position tendue en retirant une goupille et en tournant autour d'un point de pivotement, dans lequel la courroie est amovible et remplaçable tandis que l'ensemble roue folle pivotante est dans une position non tendue.
